# DEMANDE DE BREVET EUROPEEN

(11) **EP 0 976 619 A1**
(43) Date de publication de la demande: **02.02.2000**
(21) Numéro de dépôt: 99401940.4
(22) Date de dépôt: 29.07.1999
(51) Int. Cl.: B60R 16/02

(54) **Ensemble pour colonne de direction de véhicule automobile équipé d'un dispositif de comptage de tours du volant de direction**

(30) Priorité: 31.07.1998 FR 9809846
(71) Demandeur: SC2N, 78180 Montigny-le-Bretonneux (FR)
(72) Inventeur: Vivier, Yves, 14480 Rucqueville (FR)
(74) Mandataire: Texier, Christian

(57) **Abrégé**

La présente concerne un ensemble pour colonne de direction de véhicule automobile équipé d'un dispositif de comptage de tours de volant de direction et comportant deux éléments (100, 200) susceptibles de rotation relative conçus pour être reliés respectivement l'un (100) à la colonne fixe , l'autre (200) au volant, caractérisé par le fait que le dispositif de comptage comporte un index (300) guidé en rotation et en translation par l'un premier (100) de ces éléments, des moyens qui sollicitent élastiquement ledit index (300) en appui contre le second (200) de ces éléments et des moyens (210, 330) en relief prévus, d'une part sur l'index (300), d'autre part sur ledit second élément (200) pour assurer un entraînement séquentielle à rotation de l'index (300) lors de la rotation du volant.

## Description

La présente invention concerne le domaine des ensembles pour colonne de direction de véhicule automobile équipés d'un dispositif de comptage de tours de volant de direction.

Sans être limité à cette application, l'invention peut trouver notamment application dans les contacteurs rotatifs formés de moyens conçus pour assurer une liaison électrique entre la colonne fixe et l'arbre de direction ou volant rotatif lié à ce dernier. De tels contacteurs rotatifs sont utiles notamment pour transmettre des signaux entre la colonne de direction et le volant, par exemple pour assurer l'alimentation de moyens d'initiation de coussins de protection (airbag) ou capteurs ou autres organes (avertisseurs sonores par exemple voire des moyens de commutation).

La plupart des contacteurs rotatifs actuels comprennent deux éléments susceptibles de rotation relative, l'un destiné à être fixé sur la colonne de direction et l'autre destiné à être fixé sur l'arbre ou le volant, et des moyens conducteurs électriques (formés le plus souvent d'un ruban souple en matière plastique comportant des pistes métallisées) enroulés en spiral entre ces deux éléments.

Il est nécessaire de connaître la position angulaire du volant et d'un tel contacteur lors du montage de ce dernier (que ce soit lors d'une première monte ou au cours d'une opération de maintenance ultérieure). Sinon, si par exemple le volant est placé dans une position médiane tandis que le contacteur rotatif est placé dans une position extrême, lors du montage, il y a risque de détérioration du contacteur par rupture du ruban lors d'une rotation ultérieure du volant.

Ce problème est bien connu de l'homme de l'art.

Différentes solutions ont déjà été proposées à cet effet.

On a par exemple décrit dans le document US-A-4789342 un dispositif de visualisation de l'état d'un contacteur rotatif, comprenant un pignon à deux dentures qui engrène avec une fourchette d'un élément rotatif de contacteur.

On a décrit dans le document EP-A-315979 un autre dispositif de visualisation de l'état d'un contacteur rotatif comprenant un pignon excentré qui engrène avec une couronne interne d'un élément rotatif de contacteur.

On a encore décrit dans le document US-A-4867688 un autre élément de visualisation rotatif entraîné par un pignon en prise avec une couronne interne d'un élément rotatif de contacteur.

Toutes ces solutions connues jusqu'ici proposées ne donnent cependant pas totalement satisfaction.

D'une part, il s'avère que les dispositifs de visualisation ainsi proposés présentent un jeu de fonctionnement susceptible d'entraîner un bruit.

D'autre part, les structures de visualisation ainsi proposées sont toutes assez complexes.

Le but de la présente invention est de proposer un nouvel ensemble comportant un dispositif de comptage de tours de volant de direction présentant des performances supérieures à celles des dispositifs antérieurs connus, et éliminant les inconvénients de ces derniers.

Ce but est atteint dans le cadre de la présente invention grâce à un ensemble pour colonne de direction de véhicule automobile équipé d'un dispositif de comptage de tours du volant de direction et comportant deux éléments susceptibles de rotation relative conçus pour être reliés respectivement l'un à colonne fixe, l'autre au volant, caractérisé par le fait que le dispositif de comptage comporte un index guidé en rotation et en translation par l'un premier de ces éléments, des moyens qui sollicitent élastiquement ledit index en appui contre le second de ces éléments et des moyens en relief prévus, d'une part sur l'index, d'autre part sur ledit second élément, pour assurer un entraînement séquentiel à rotation de l'index lors de la rotation du volant.

L'action combinée des moyens élastiques et du guidage de l'index par le premier élément permet dans le cadre de la présente invention de supprimer tout jeu de fonctionnement.

D'autres caractéristiques, buts et avantages de la présente invention apparaîtront à la lecture de la description détaillée qui va suivre, et en regard des dessins annexés donnés à titre d'exemple non limitatif et sur lesquels :

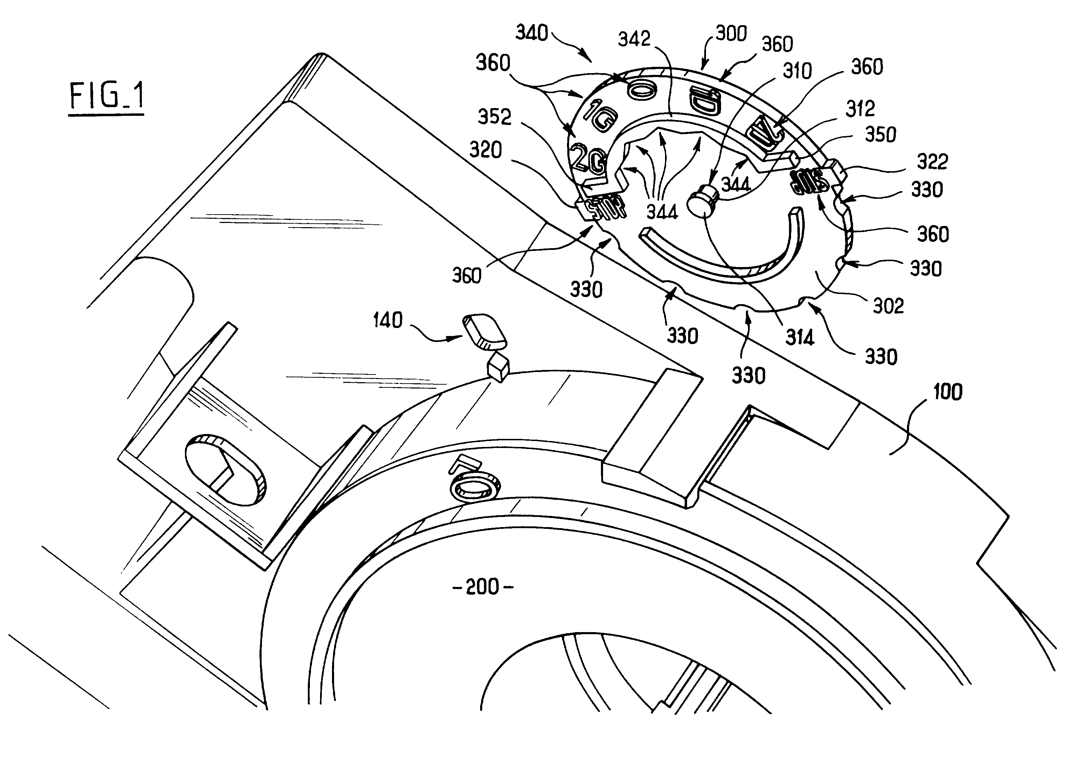

- la figure 1 représente une première vue schématique en perspective éclatée d'un ensemble conforme à la présente invention,

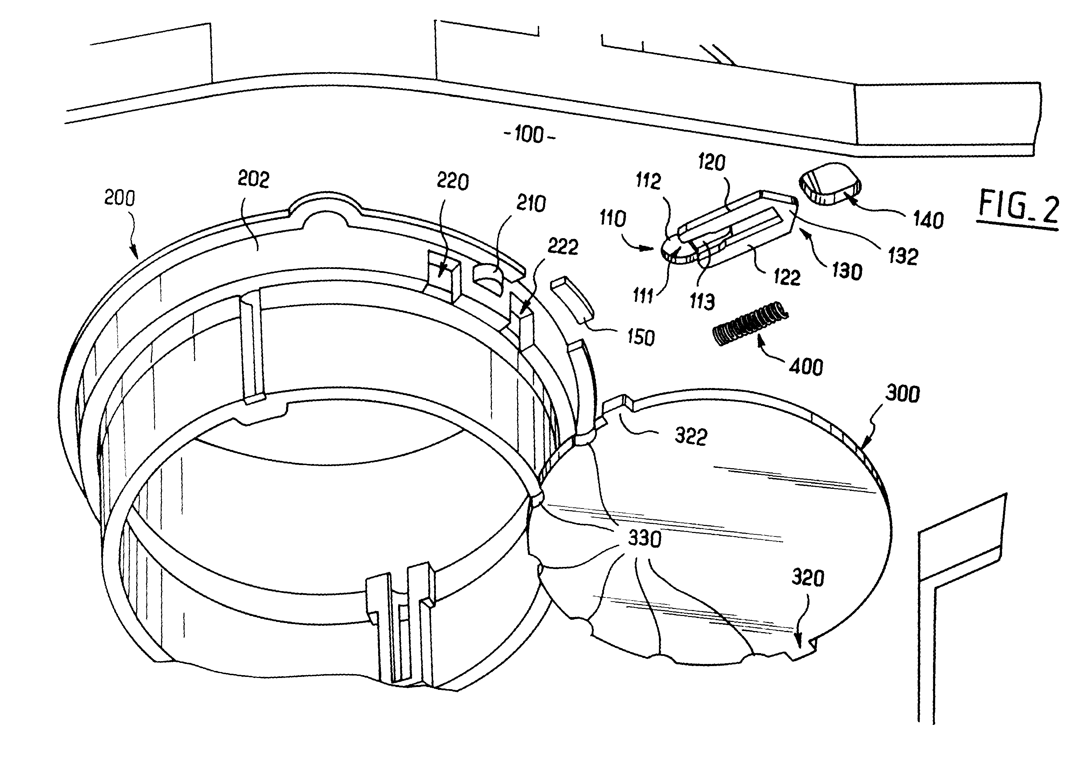

- la figure 2 représente une autre vue en perspective éclatée du même ensemble selon une autre direction, et
- les figures 3, 4, 5, 6 et 7 représentent des vues en plan de cet ensemble dans cinq positions successives de fonctionnement.

Pour l'essentiel, l'ensemble conforme à la présente invention comprend un élément fixe 100 qui sera dénommé par la suite boîtier, un élément mobile 200 qui sera dénommé par la suite couvercle, un index 300 et des moyens élastiques de sollicitation 400.

Le boîtier 100, le couvercle 200 et l'index 300 sont de préférence réalisés par moulage en matière plastique. En revanche, les moyens élastiques 400 sont de préférence métallique.

L'index 300 a la forme générale d'un disque. Il est guidé à rotation autour de son axe central et à translation selon son plan moyen transversal à cet axe sur le boîtier 100.

Pour cela sur sa face 302 adjacente au boîtier 100, le disque 300 comporte un tourillon central 310.

Selon le mode de réalisation préférentiel illustré sur les figures annexées, ce tourillon 310 est formé de deux éléments cylindriques adjacents empilés axialement : l'un 312 de petit diamètre adjacent à la face 302 de l'index et l'autre 314 de plus grand diamètre qui définit le sommet du tourillon 310.

Sur sa périphérie extérieure, le disque 300 est muni de deux excroissances 320, 302 diamétralement opposées, par exemple de contour rectangulaire, situés dans le plan du disque.

Comme on le décrit ultérieurement, ces deux excroissances 320, 322 on pour fonction de servir de butée limitant la rotation de l'index 300 par rapport au couvercle 200.

Sur sa périphérie extérieure et sur l'un des secteurs de 180° délimité entre les excroissances 320, 322, l'index 300 est muni d'encoches 330 équirépartis. Selon le mode de réalisation particulier et non limitatif illustré sur les figures annexées, il est ainsi prévu six encoches 330 réparties à 25° environ l'une de l'autre.

Le nombre d'encoches 330 est égal au nombre total de tours de rotation autorisé pour le couvercle 200.

Ces encoches 330 sont destinées à coopérer avec un ergot d'entraînement 210 prévu sur le couvercle 200 pour entraîner l'index 300.

Sur sa face 302 l'index 300 est également muni de moyens 340 d'indexation dans sa rotation par rapport au boîtier 100.

Selon le mode de réalisation préférentiel illustré sur les figures annexées, ces moyens d'indexation 340 sont formés de rampes venues de moulage sur une nervure 342 en forme de secteurs de couronne formant environ 180°, centrés sur l'axe du tourillon 310 et dont la concavité est dirigée généralement vers le couvercle 200. Plus précisément encore, la surface radialement interne de cette nervure 342 est trempée. Selon le mode de réalisation illustré sur les figures annexées, la nervure 342 présente ainsi sur sa surface radialement interne cinq dièdres concaves 344.

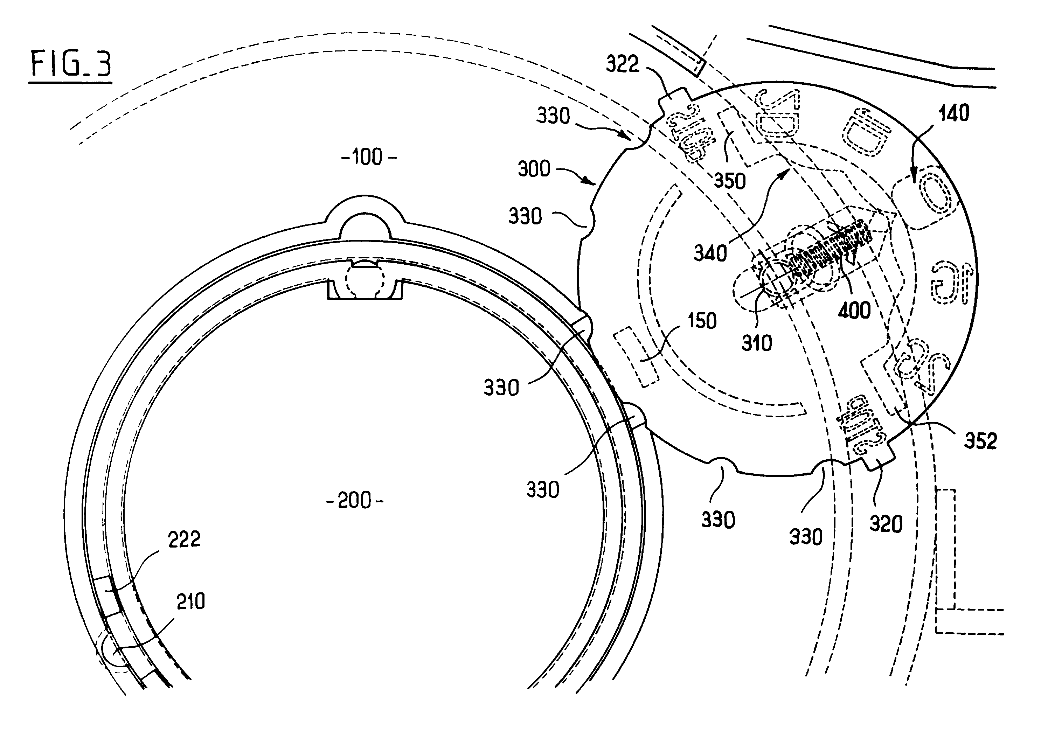

Comme on a illustré sur les figures 3 et suivantes, l'index 300 repose ainsi par l'intermédiaire de l'un de ces dièdres concaves 344 sur l'extrémité effilée de moyens d'indexation complémentaires 130 prévus sur le boîtier 100, sous l'effet de la sollicitation des moyens élastiques 400.

On notera que la nervure 342 possède deux excroissances diamétralement opposées 350, 352 en saillie radialement vers l'extérieur, sur ces extrémités.

Ces excroissances 350, 352 constituent des butées aptes à coopérer avec des butées complémentaires prévues sur le boîtier 100 pour limiter la rotation de l'index 300 par rapport à ce boîtier 100.

En outre, l'index 300 est muni sur sa face 102 et sur l'extérieur de la nervure 340 de repères 360.

Ces repères 340 sont formés de préférence de structure en relief venus de moulage.

Ils sont positionnés sur l'index 300 pour être disposés respectivement en regard d'une fenêtre 140 ménagée dans le boîtier 100 afin d'être observés successivement selon la position de l'index 300.

De tels repères 360 peut faire l'objet de nombreux modes de réalisation.

Selon le mode de réalisation préférentiel, il est ainsi prévu sept repères 360 répartis sur l'extérieur de la nervure 342 sur un secteur angulaire de l'ordre de 180°.

Plus précisément encore, il est ainsi prévu de préférence :
- un repère "O" disposé pour être positionné en regard de la fenêtre 140 en position médiane de l'index 300 et du capteur rotatif,
- un repère "1D" positionné pour être placé en regard de la fenêtre 140 après une rotation du couvercle 200 sur 180° vers la droite à partir de la position médiane précitée,
- un repère "2D" positionné pour être placé en regard de la fenêtre 140 après rotation supplémentaire de 360° du couvercle 200,
- un première repère "STOP" positionné pour être placé en regard de la fenêtre 140 après rotation supplémentaire du couvercle 200 sur 180°,
- un repère "1G" positionné pour être placé en regard de la fenêtre 140 après rotation du couvercle 200 sur 180° vers la gauche à partir de la position médiane,
- un repère "2G" positionné pour être placé en regard de la fenêtre 140 après rotation supplémentaire du couvercle 200 sur 360°, et
- un second repère "STOP" positionné pour être placé en regard de la fenêtre 140 après rotation supplémentaire vers la gauche du couvercle 200 sur 360°.

Le boîtier 100 peut faire l'objet de nombreuses variantes de réalisation. Pour cette raison, il ne sera pas décrit dans le détail par la suite.

Comme indiqué précédemment, le boîtier 100 comprend des moyens 110 adaptés pour assurer un guidage à rotation et à translation de l'index 300.

Ces moyens de guidage 110 comprennent un passage 111 traversant une paroi du boîtier 100 et conçu pour recevoir le tourillon 310.

Plus précisément encore, selon le mode de réalisation préférentiel ce passage 111 est en forme de "trou de serrure". Il s'agit ainsi préférentiellement d'un perçage 112 présentant un diamètre complémentaire de l'élément 314 de plus grand diamètre du tourillon 310, prolongé radialement par rapport à l'axe de rotation du couvercle 200 et à l'opposé de celui-ci par une rainure rectiligne 113 dont la largeur est complémentaire du diamètre du plus petit élément 312 du tourillon 310.

L'homme de l'art comprendra que la structure ainsi définie permet d'introduire le tourillon 310 dans le perçage 111 puis de translater le tourillon dans la rainure 113 lorsque l'élément 314 de plus grand diamètre a franchi l'épaisseur de la paroi du boîtier 100. Ainsi, l'index 300 est retenu sur le boîtier 100 tout en restant libre de rotation autour de son axe et de translation selon la longueur de la rainure 113.

Cette rainure 113 est encadrée par deux murets 120, 122 qui servent de guide pour l'organe élastique 400. Il s'agit ici d'un ressort hélicoïdal 400 dont le diamètre coïncide sensiblement avec l'écartement défini entre ces murets 120, 122.

Les murets 120, 122 se réunissent sur leur extrémité opposée au perçage 111 et au couvercle 200 sous forme d'un dièdre convexe 132 formant le moyen d'indexation 130 précité lié au boîtier 100.

Ce dièdre convexe 132 vient reposer contre l'un des dièdres concaves 344 des moyens d'indexation prévus sur l'index 300 sous l'effet de la sollicitation du ressort 400.

Pour cela le ressort 400 est positionné entre le tourillon 310 et le fond du dièdre 130 précité.

On notera que la fenêtre 140 est placée dans le prolongement de ces moyens d'indexation 130, à l'opposé de ceux-ci par rapport au couvercle 200.

La butée prévue sur le boîtier 100 pour coopérer avec les excroissances 350, 352 formées sur l'index 300 sont formées de préférence d'une nervure 150 en forme de secteurs de couronne centrés sur l'axe de rotation du couvercle 200 et situés sur la paroi du boîtier 100 entre le logement du couvercle 200 et les moyens d'indexation 130 précités.

Le couvercle 200 peut également faire l'objet de nombreuses variantes de réalisation et ne sera donc pas décrit dans le détail par la suite pour cette raison.

On notera cependant, que pour l'essentiel, le couvercle 200 comprend une cage cylindrique 202 montée à rotation autour de son axe parallèle à l'axe de rotation de l'index 300.

Le couvercle 200 peut ainsi être guidé à rotation sur le boîtier 100 par tout moyen connu approprié.

Le couvercle 200 est également muni de moyens aptes à assurer sa rotation autour de son axe lors d'un entraînement du volant.

Comme indiqué précédemment, le couvercle 200 est muni sur sa périphérie extérieure d'un ergot 210 adapté pour coopérer avec les encoches 330 de l'index. Il s'agit de préférence d'un ergot 210 présentant une enveloppe hémicylindrique dont les génératrices sont parallèles à l'axe de rotation du couvercle 200. Le rayon de courbure de l'ergot 210 est de préférence identique au rayon de courbure des encoches 330 formé sur l'index.

Cet ergot 210 est encadré, sur la périphérie extérieure du couvercle 200, par deux encoches 220, 222, de préférence d'enveloppes parallélépipédiques destinées à coopérer avec les excroissances 320, 322 prévues sur l'index 300.

Le fonctionnement de l'ensemble ainsi formé est essentiellement le suivant.

En position médiane, comme illustré sur la figure 3, l'index 300 et le couvercle 200 présentent une symétrie générale par rapport à un plan passant par leurs axes de rotation. L'ergot 210 du couvercle est diamétralement opposé à l'index 300.

Cet index 300 repose sur le dièdre convexe 132 des moyens d'indexation 130 prévus sur le boîtier par son cran 344 central.

Le repère "O" de l'index 300 est situé en regard de la fenêtre 140.

Après entraînement du couvercle 200 sur environ 180°, l'ergot 210 atteint une première encoche 330 de l'index 300.

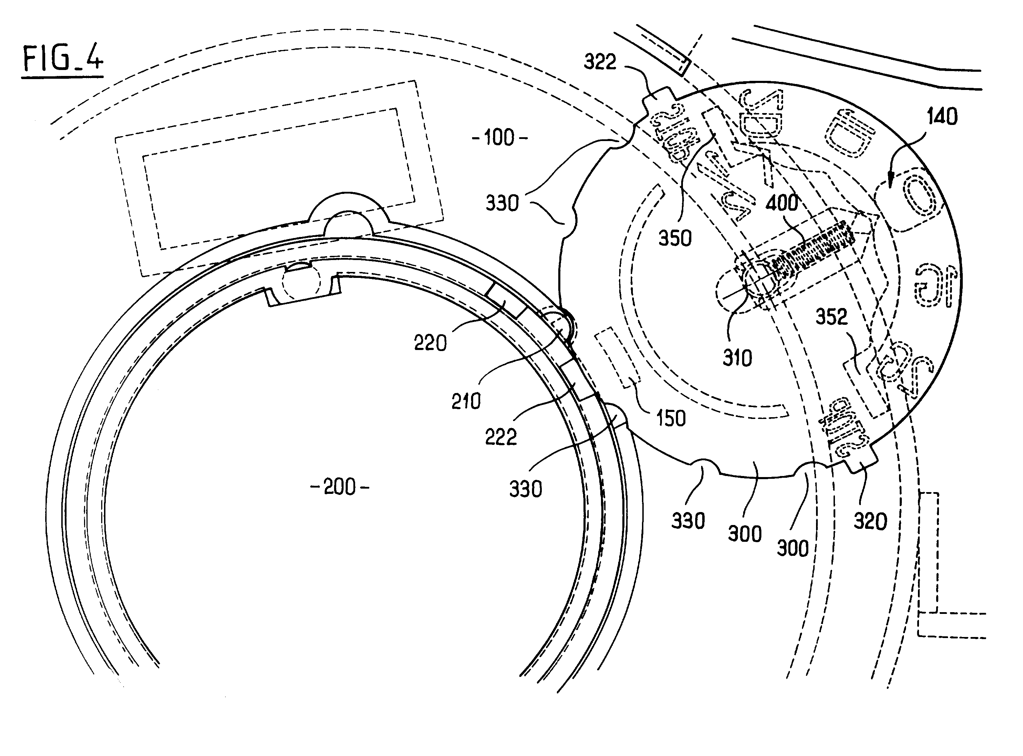

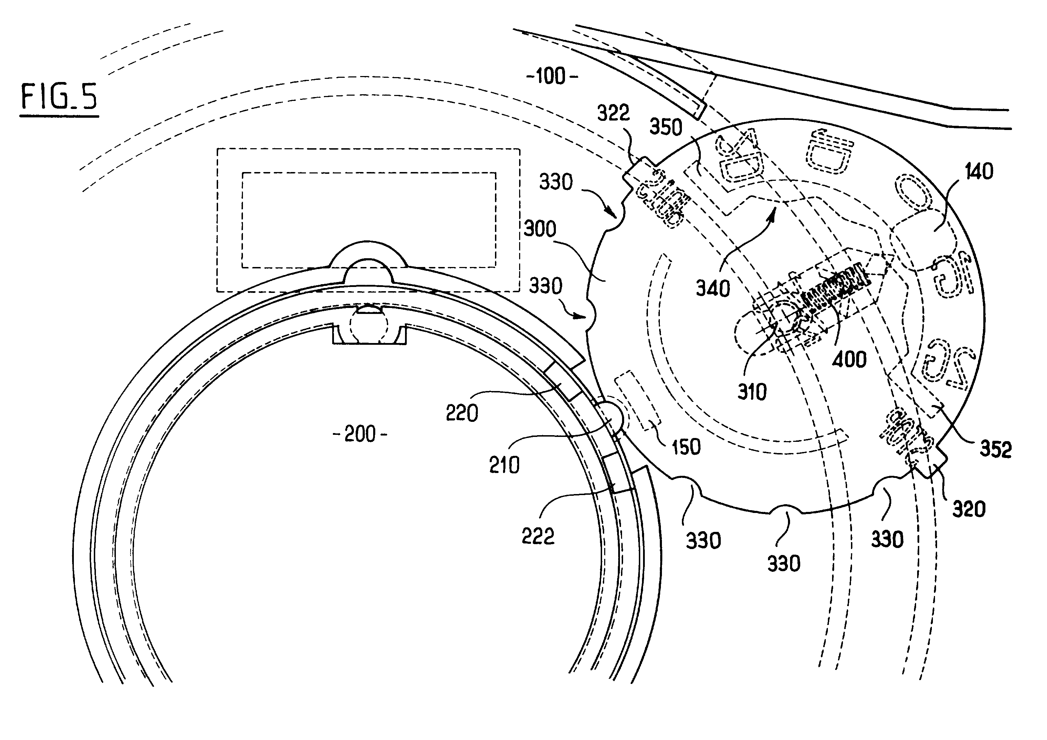

Si la rotation du couvercle 200 est poursuivie, comme on le voit à l'examen comparé des figures 4 et 5, l'ergot 210 pénétrant dans l'encoche précitée 330 assure une rotation de l'index 300 dans un sens inverse du couvercle 200. Ainsi, lorsque de la figure 4 à la figure 5, le couvercle 200 est entraîné dans le sens horaire, l'index 300 est entraîné dans le sens trigonométrique.

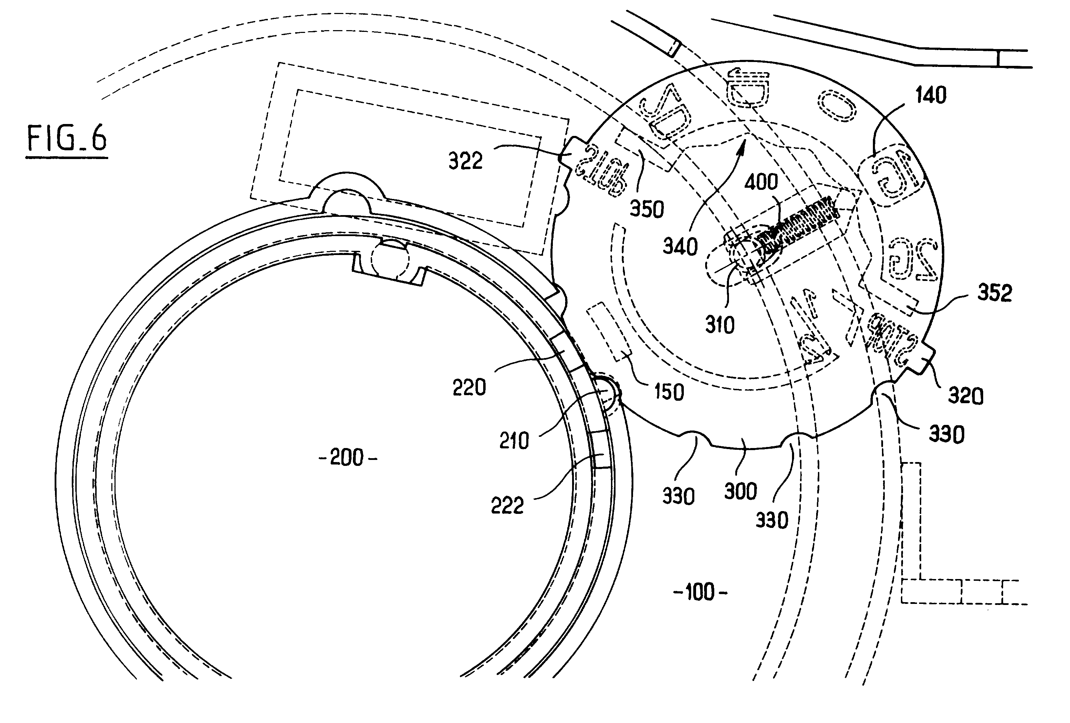

Puis, comme on le voit sur la figure 6, l'ergot d'entraînement 210 échappe à l'encoche 330. L'index 300 vient alors reposer sur le dièdre convexe d'indexation 132 par un second cran 344 sous la sollicitation du ressort 400.

Le repère "1G" (ou le cas échéant "1D" selon le sens de rotation) est alors placé en regard de la fenêtre 140.

Si la rotation du couvercle 200 est continuée sur 360°, l'ergot 210 atteint une seconde encoche 330 et assure la rotation de l'index 300 dans les mêmes conditions sur un pas d'indexation. Le repère "2G" (ou "2D" selon le sens de rotation) est alors placé en regard de la fenêtre 140.

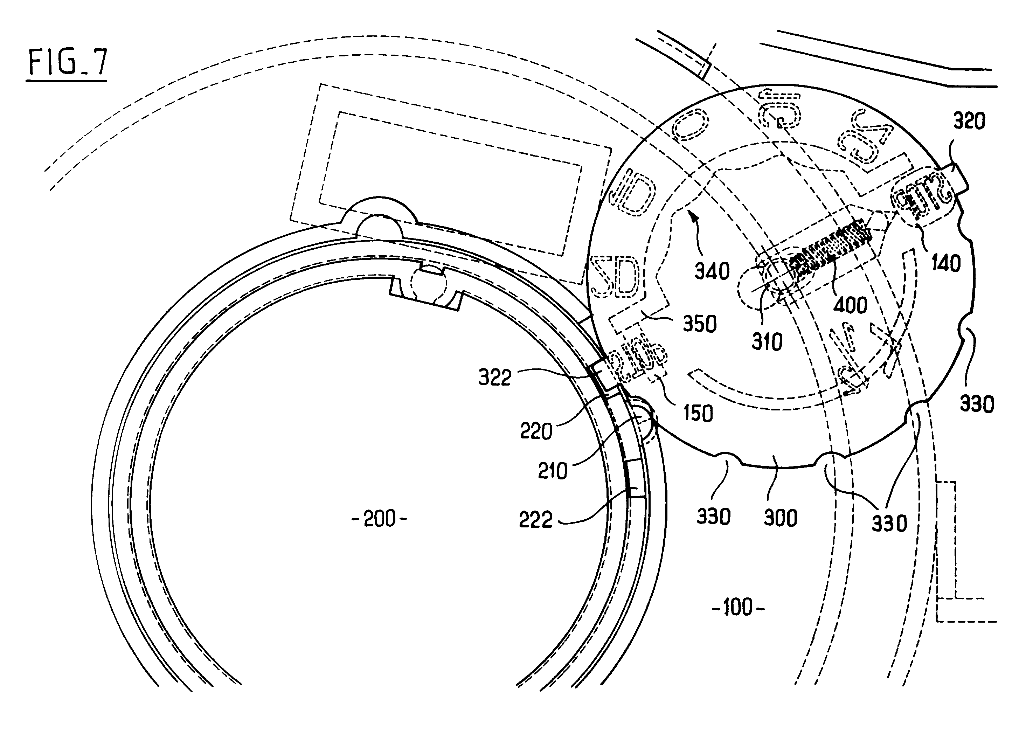

Enfin, après une nouvelle rotation du couvercle 200, comme on le voit sur la figure 7, une excroissance 350 ou 352 de l'index vient prendre appui sur la butée 150 du boîtier pour limiter la rotation de l'index 300.

L'un des repères "STOP" est alors placé en regard de la fenêtre 140.

Par ailleurs simultanément l'une des excroissances 320 ou 322 de l'index pénètre dans l'une des encoches 200, 222 du couvercle 200 pour interdire toute rotation ultérieure de ce dernier.

On évite ainsi toute détérioration du contacteur rotatif par mise en traction du ruban conducteur de celui-ci.

Le retour en position médiane du contacteur est opéré par rotation inverse du couvercle.

Le fonctionnement est identique lors d'une rotation du contacteur rotatif dans le sens opposé à partir de sa position médiane.

Bien entendu la présente invention n'est pas limitée au mode de réalisation particulier qui vient d'être décrit, mais s'étend à toutes variantes conformes à son esprit.

On notera que l'ensemble conforme à la présente invention constitue un système sans jeu et sans frottement grâce à l'entraînement qui se fait au diamètre primitif sécant entre l'index 300 et le couvercle 200 avec compensation par échappement de l'index 300 grâce à sa translation autorisée et retour en position initiale de l'index à la sollicitation du ressort 400.

Cette construction permet en outre grâce aux ergots 350, 352 et 320, 322 prévus sur l'index de garantir une fin de course et d'immobiliser le mouvement de rotation du couvercle 200 après n tours, n dépendant de la combinaison diamètre de l'index 300, diamètre du couvercle 200.

L'homme de l'art comprendra par ailleurs que la structure proposée dans le cadre de la présente invention permet de maintenir l'index en position sans jeu et de limiter le frottement de l'index sous le couvercle 200 après échappement de l'ergot d'entraînement 210 hors d'une encoche 330.

Enfin, l'homme de l'art notera que la structure ainsi proposée dans le cadre de la présente invention est particulièrement simple et comporte un nombre de pièce restreint.

## Revendications

1. Ensemble pour colonne de direction de véhicule automobile équipé d'un dispositif de comptage de tours de volant de direction et comportant deux éléments (100, 200) susceptibles de rotation relative conçus pour être reliés respectivement l'un (100) à la colonne fixe , l'autre (200) au volant, caractérisé par le fait que le dispositif de comptage comporte un index (300) guidé en rotation et en translation par l'un premier (100) de ces éléments, des moyens qui sollicitent élastiquement ledit index (300) en appui contre le second (200) de ces éléments et des moyens (210, 330) en relief prévus, d'une part sur l'index (300), d'autre part sur ledit second élément (200) pour assurer un entraînement séquentielle à rotation de l'index (300) lors de la rotation du volant.

2. Ensemble selon la revendication 1, caractérisé par le fait que les moyens en relief comprennent, d'une part des encoches prévues sur la périphérie de l'index (300) en forme de disque et d'autre part un ergot (210) sur ledit second élément (200).

3. Ensemble selon la revendication 2, caractérisé par le fait qu'il est prévu six encoches (330) sur la périphérie de l'index (300).

4. Ensemble selon l'une des revendications 1 à 3, caractérisé par le fait qu'il est prévu des moyens formant butée (320, 322, 350, 352, 150, 220, 222) limitant la rotation de l'ensemble.

5. Ensemble selon la revendication 4, caractérisé par le fait qu'il est prévu des moyens limitant l'angle de rotation de l'index (300) par rapport au premier élément (100).

6. Ensemble selon l'une des revendications 4 et 5, caractérisé par le fait qu'il est prévu des moyens (350, 352) formant butée sur l'index (300) et des moyens complémentaires (150) sur le premier élément pour limiter l'angle de rotation relatif entre ceux-ci.

7. Ensemble selon l'une des revendications 4 à 6, caractérisé par le fait qu'il est prévu en outre des moyens limitant l'angle de rotation entre l'index (300) et le second élément (200).

8. Ensemble selon l'une des revendications 1 à 7, caractérisé par le fait qu'il est prévu des moyens formant butée complémentaires entre l'index (300) et le second ensemble (200) pour limiter la rotation relative entre ceux-ci.

9. Ensemble selon l'une des revendications 1 à 8, caractérisé par le fait qu'il est prévu deux excroissances (320, 322) sur la périphérie de l'index (300) et des logements (220, 222) complémentaires sur le second élément (200).

10. Ensemble selon l'une des revendications 1 à 9, caractérisé par le fait que l'index (300) comporte un tourillon (310) adapté pour être logé dans un passage (111) traversant le premier élément (100).

11. Ensemble selon la revendication 10, caractérisé par le fait que le tourillon (310) comprend deux éléments cylindriques (312, 314) de diamètre croissant empilé sur l'index (300) tandis que le passage (111) traversant le premier élément (100) est en forme de trou de serrure.

12. Ensemble selon l'une des revendications 1 à 11, caractérisé par le fait qu'il comprend des moyens d'indexation de l'index (300) par rapport au premier élément (100).

13. Ensemble selon la revendication 12, caractérisé par le fait que les moyens d'indexation comprennent des rampes crantées (344) sur l'index aptes à reposer sur un dièdre convexe (132) solidaire du premier élément (100).

14. Ensemble selon l'une des revendications 1 à 13, caractérisé par le fait qu'il comprend des repères (360) sur l'index (300) positionné pour être placé respectivement en regard d'une fenêtre (140) formée dans le premier élément (100) selon la position angulaire de l'index (300) et du second élément (200).
